# EUROPEAN PATENT SPECIFICATION

(11) **EP 2 457 535 B1**
(45) Date of publication and mention of the grant of the patent: **26.07.2017**
(21) Application number: 10380142.9
(22) Date of filing: 25.11.2010
(51) Int. Cl.: A61C 7/14, A61C 7/30

(54) **Archwire bracket for orthodontics**
Bogendrahtzahnspange
Support de fil métallique pour orthodontie

(43) Date of publication of application: 30.05.2012
(73) Proprietor: Solano Reina, Enrique, 41011 Sevilla (ES); Mendoza Mendoza, Asunción, 41011 Sevilla (ES)
(72) Inventor: Solano Reina, Enrique, 41011 Sevilla (ES); Mendoza Mendoza, Asunción, 41011 Sevilla (ES)
(74) Representative: Torner Lasalle, Elisabet

(56) References cited:
- ES-A1- 2 232 243
- US-A- 5 302 121
- US-A- 5 516 288
- US-A1- 2007 134 611

## Description

### Technical Field

The present invention relates to an archwire bracket applicable to orthodontic techniques which use an archwire secured to a plurality of such brackets, which are in turn fixed to several teeth of a patient, to apply a predetermined torque to said teeth and thus correct defects in the teeth. This archwire bracket is also often referred to with the term "bracket" in the orthodontics sector.

### Background of the Invention

Patent ES-A-2232243, of the same inventor as the present invention, upon which the two-part form of claim 1 is based, describes an orthodontic archwire bracket including a first body with a base for being fixed to a tooth, a second body with a slot for the archwire, and an adjustment mechanism based on a cylindrical joint coupling between said first and second bodies. The second body is made of a material with shape memory due to a thermal effect, such that when the two bodies are cooled they are capable of mutual movement, and when they are heated to body temperature the expansion of the second body locks the joint coupling in a desired position, which allows adjusting the torque and the inclination of the archwire without needing to change the bracket.

Nevertheless, a drawback of this bracket of the mentioned patent ES-A-2232243 is that the cylindrical joint coupling only allows adjustments of the angular position of the slot in one axis. Another drawback is that the second body is essentially solid, so it is economically costly due to the relatively high price of the material with shape memory and the impossibility of making it functional. Yet another drawback is that the second body does not include means for retaining the archwire in the corresponding slot, which forces resorting to additional means.

International patent application WO 03/000151 discloses an orthodontic archwire bracket comprising a base to which there is fixed a plurality of parts having respective slot portions which together define a slot for the archwire and cavities between the slot portions where there are housed C-shaped latches for retaining the archwire in the slot. The latches can optionally be made of a material with shape memory. Nevertheless, this archwire bracket does not include adjustment means for varying the angular position of the archwire with respect to the base and the torque transmitted by the latter to the bracket. Furthermore, said plurality of parts imposes onerous manufacturing and assembly tasks.

### Disclosure of the Invention

The present invention contributes to mitigating the previous and other drawbacks by providing an orthodontic archwire bracket of the type comprising a first body provided with a base configured to be fixed to a tooth and a second body provided with a main slot configured to receive an archwire. Said first and second bodies are connected to one another by a ball joint coupling, and the second body is made of a material with shape memory which maintains an original shape at a first temperature equivalent to body temperature and acquires a deformable state at a second temperature below body temperature.

The first and second bodies are sized such that said ball joint coupling allows relative movements between the first and second bodies when both are at said second temperature at which the second body is deformable and the ball joint coupling is locked by friction between the first and second bodies when both are heated to said first temperature at which the second body recovers its original shape. Given that the first temperature is equivalent to body temperature, the spherical ball joint coupling is locked when the archwire bracket is installed in the mouth of a patient.

The second body comprises a central hollow portion, such that said main slot comprises two mutually aligned main slot portions located on opposite sides of said central hollow portion. Furthermore, the second body comprises retaining members extending into each of said main slot portions next to an inlet thereof. These retaining members are configured to retain said archwire in the main slot portions when the second body is in said original shape and to allow inserting and removing the archwire from the main slot portions by the deformation of the second body when the latter is at the body temperature.

The ball joint coupling is preferably a spherical ball joint coupling, for which the present invention envisages two reverse embodiments. In a first embodiment, the spherical ball joint coupling is formed by one or more inner spherical surface portions formed in a hollow of the first body and one or more outer spherical surface portions formed in the second body, in which case the second body, or at least the region of the second body having formed therein the outer spherical surface portions, is housed inside the hollow of the first body. In a second embodiment, the spherical ball joint coupling is formed by one or more outer spherical surface portions formed in the first body and one or more inner spherical surface portions formed in said central hollow portion of the second body, in which case the region of the first body having formed therein the outer spherical surface portions is housed inside the central hollow portion of the second body.

The second body includes hollow portions, truncations, transverse slots and notches for facilitating the deformation thereof when it is in the deformable state for the purpose of inserting the region of the first or second body having formed therein the outer spherical surface portions into the hollow of the second or first body having formed therein the inner spherical surface portions.

The mentioned hollow portions, truncations, transverse slots and notches are furthermore designed in both embodiments to assure the functionality without fractures occurring for the purpose of minimizing the manufacturing cost of the bracket, taking into account the relatively high price of the material with shape memory.

With the described configuration, the orthodontic archwire bracket of the present invention allows performing adjustments in the torque imparted by the archwire to the tooth through the bracket and in the angular position of the archwire with respect to the base of the bracket in three coordinate axes as a result of the spherical ball joint coupling and of the material with shape memory used for the second body. Furthermore, the archwire bracket of the present invention incorporates retaining means for retaining the archwire in the main slot without needing to use additional elements, which allows reducing the general volume of the bracket and limiting the total number of parts to only two parts.

### Brief Description of the Drawings

The previous and other features and advantages will be more fully understood from the following detailed description of several exemplary embodiments with reference to the attached drawings, in which:
Figure 1 is a perspective view of separated first body and second body which once mutually coupled form an orthodontic archwire bracket according to a first embodiment of the present invention;
Figure 2 is a perspective view of the bracket according to the first embodiment formed by the mutually coupled first and second bodies, and a portion of the archwire separated from the bracket;
Figure 3 is a perspective view of the bracket according to the first embodiment with the portion of the archwire coupled thereto;
Figure 4 is a cross-sectional view of the bracket according to the first embodiment with the portion of the archwire coupled thereto taken through a middle plane perpendicular to the longitudinal axis of the archwire;
Figure 5 is a cross-sectional view of the bracket according to the first embodiment with the portion of the archwire coupled thereto taken through a middle plane parallel to the longitudinal axis of the archwire;
Figure 6 is a perspective view of separated first body and second body which once mutually coupled form an orthodontic archwire bracket according to a second embodiment of the present invention;
Figure 7 is a perspective view of the bracket according to the second embodiment, which is formed by the mutually coupled first and second bodies, and a portion of the archwire separated from the bracket;
Figure 8 is a perspective view of the bracket according to the second embodiment with the portion of the archwire coupled thereto;
Figure 9 is a side elevational view of the bracket according to the second embodiment with the portion of the archwire coupled thereto seen in a direction parallel to the longitudinal axis of the archwire; and
Figure 10 is a side elevational view of the bracket according to the second embodiment with the portion of the archwire coupled thereto seen in a direction perpendicular to the longitudinal axis of the archwire.

### Detailed Description of Exemplary Embodiments

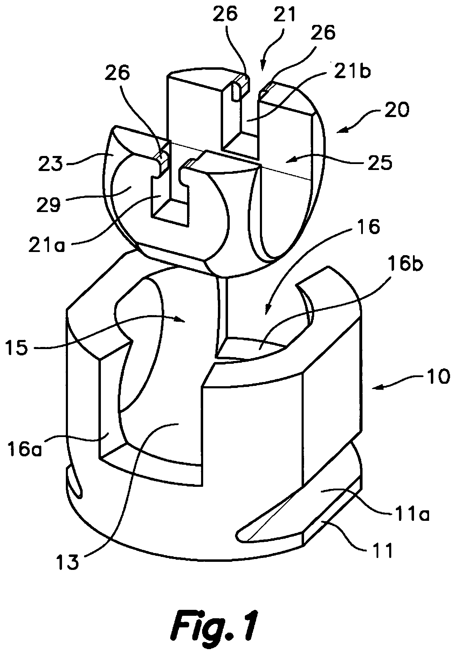

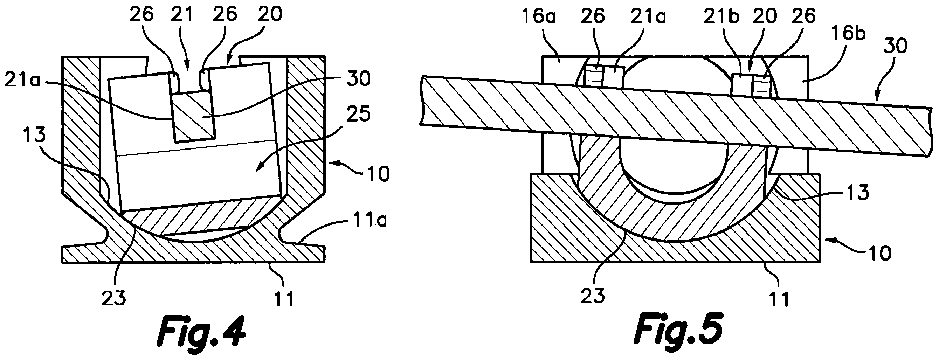

With reference first to Figures 1 to 5, a first embodiment of the orthodontic archwire bracket according to the present invention is described. The bracket comprises a first body 10 provided with a base 11 configured to be fixed to a tooth and a second body 20 provided with a main slot 21 configured to receive an archwire 30. In this embodiment, the first body 10 includes side slots 11a which contribute to defining the base 11.

The first body 10 has a hollow 15 in which there are formed several concentric inner spherical surface portions 13, whereas the second body 20 has formed thereon several concentric outer spherical surface portions 23 the radius of which is selected according to the radius of the inner spherical surface portions 13 of the first body to form a spherical ball joint coupling between the first body 10 and the second body 20. Alternatively, the first body 10 could have a single inner spherical surface portion 13 and the second body 20 could have a single outer spherical surface portion 23 with an equivalent result.

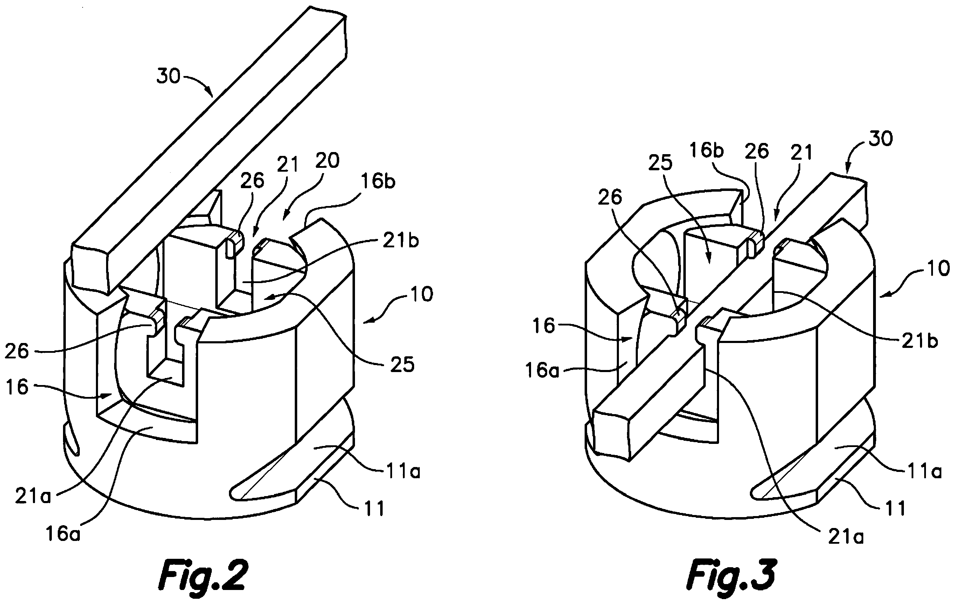

Figures 2 to 5 show the mutually coupled first and second bodies 10, 20, with the second body 20 housed inside said hollow 15 of the first body 1 such that the respective inner and outer spherical surface portions form the spherical ball joint coupling between both. Due to the fact that the inner spherical surface portions 13 of the first body 10 cover more than half a sphere, the second body 20 is retained such that it cannot come out of the hollow 15 of the first body 10. In the embodiment shown, the second body 20 does not protrude from the hollow 15 of the first body 10, although there is no limitation for the second body 20 to be housed only partly in the hollow 15 of the first body 10.

The second body 20 has a central hollow portion 25 and the mentioned main slot 21 is formed by two mutually aligned main slot portions 21a, 21b formed on opposite sides of said central hollow portion 25. These main slot portions 21a, 21b are configured to fit to outer surfaces of the archwire 30. The second body 20 further comprises, next to a radial inlet of each of the main slot portions 21a, 21b, a pair of retaining members 26 extending towards one another and into the corresponding main slot portion 21 a, 21 b.

These retaining members 26 are configured to retain said archwire 30 in the main slot 21 and have rounded ends to allow the archwire 30 to be inserted and removed from the main slot portions 21a, 21b by the deformation of the second body 20, and the main slot portions 21a, 21b are configured to fit to outer surfaces of the archwire 30. Alternatively, the retaining members 26 of this first embodiment can have at their ends inclined surfaces similar to the outer and inner inclined surfaces 26a, 26b described below in relation to the second embodiment.

Thus, the archwire 30 can be introduced into the main slot 21 by pressing from outside against the retaining members 26, and is retained in the main slot 21 by the retaining members 26 without the possibility of performing movements in any radial direction with respect to its own axis. The archwire 30 can also be removed from the main slot 21 by pressing from inside against the retaining members 26.

The first body 10 also comprises a secondary slot 16 formed by two mutually aligned secondary slot portions 16a, 16b formed on opposite sides of the hollow 15 and approximately aligned with the main slot portions 21a, 21b of the second body 20 to receive the archwire 30. These secondary slot portions 16a, 16b of the first body 10 are larger than the main slot portions 21a, 21b of the second body 20 to allow the second body 20 together with the archwire 30 retained in the main slot 21 thereof to be able to perform, to a desired degree, movements with respect to the first body 10 according to three coordinate axes as a result of the spherical ball joint coupling provided by the respective inner and outer spherical surface portions 13, 23.

To immobilize the second body 20 with respect to the first body 10 in a desired position, the second body 20 is made of a material with shape memory due to a thermal effect, such as a nickel-titanium alloy, such that at a first temperature, such as body temperature, the second body 20 has an original shape and when the second body 20 is cooled to a second temperature below the first temperature it acquires a deformable state. In the mentioned original shape, the outer spherical surface portions 23 of the second body 20 have a radius slightly greater than the radius of the inner spherical surface portions 13 of the first body 10.

Thus, when the second body 20 is cooled, it becomes deformable enough to allow housing the second body 20 inside the first body 10 and when the mutually coupled first and second bodies 10, 20 are heated to body temperature, for example, due to having been installed in the mouth of a patient, the second body 20 recovers the original shape and the spherical ball joint coupling is locked in the desired position by friction between the inner and outer spherical surface portions 13, 23 of the first and second bodies 10, 20, and the archwire 30 is retained in the main slot 21 of the second body 20. At the body temperature the archwire 30 is inserted in the main slot 21 by the deformation of the second body 20.

For the purpose of maximally reducing the risk of the second body 20 breaking when it is confined in the first body 10, a uniform section of material and smooth fitting radii have been envisaged. For the purpose of maximally reducing the economic cost of the second body, taking into account the relatively high price of the material with shape memory, the amount thereof necessary for forming the second body 20 has been minimized by means of the central hollow portion 25 and truncations 29 in the outer spherical surface portions 23.

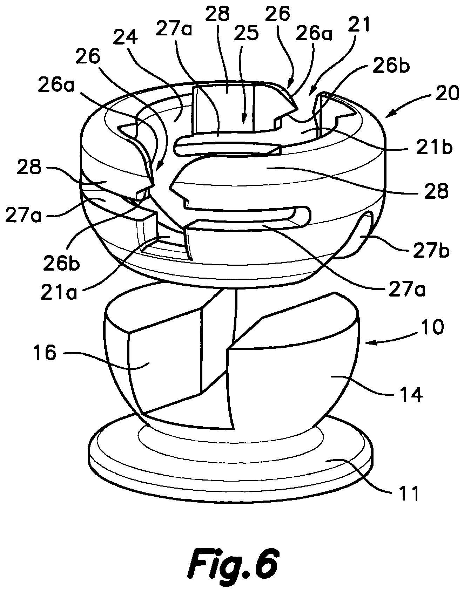

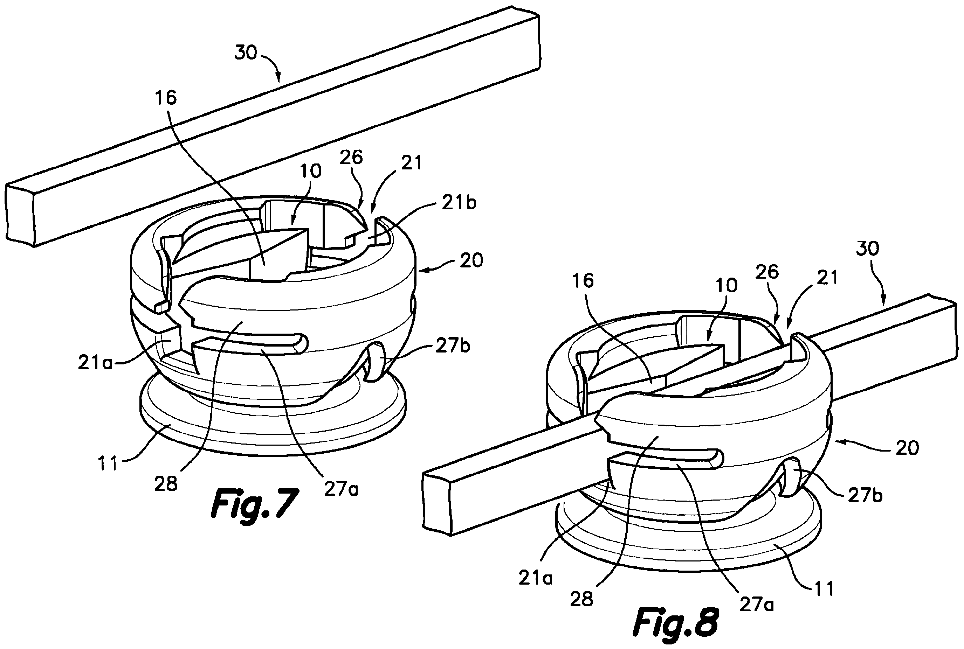

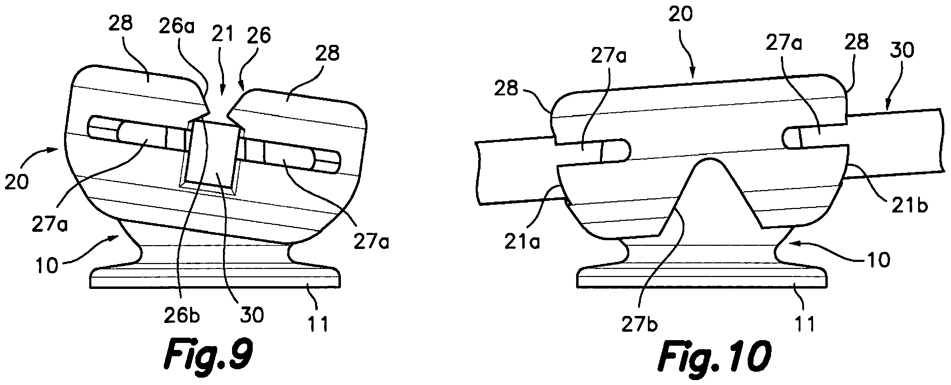

In relation now to Figures 6 to 10, a second embodiment of the orthodontic archwire bracket according to the present invention is described which, like the first embodiment, comprises a first body 10 provided with a base 11 configured to be fixed to a tooth and a second body 20 provided with a main slot 21 configured to receive an archwire 30, said first and second bodies 10, 20 being connected to one another by a ball joint coupling.

The essential difference lies in that, in this second embodiment, the first body 10 has formed thereon outer spherical surface portions 14 and the second body 20 comprises a central hollow portion 25 in which there are formed inner spherical surface portions 24, and the part of the first body 10 in which said outer spherical surface portions 14 are formed is housed inside the central hollow portion 25 of the second body 20 to form the spherical ball joint coupling.

In a manner similar to the first embodiment, the main slot 21 of the second body 20 of the second embodiment is formed by two mutually aligned main slot portions 21a, 21b formed on opposite sides of said central hollow portion 25, and these main slot portions 21a, 21b are configured to fit to outer surfaces of the archwire 30. The second body 20 further comprises, next to a radial inlet of each of the main slot portions 21a, 21b, a pair of retaining members 26 extending towards one another and into the corresponding main slot portion 21 a, 21 b.

Here, the retaining members 26 comprise outer inclined surfaces 26a for facilitating the insertion of the archwire 30 under pressure and inner inclined surfaces 26b for facilitating the removal of the archwire 30 under pressure. The second body 20 further comprises transverse slots 27a connected with the main slot 21 and extending therefrom to define arms 28 at the ends of which there are the retaining members 26 for facilitating the deformation of the second body 20 enough to allow the insertion and removal of the archwire 30 under pressure.

The first body 10 also comprises a secondary slot 16 for housing the archwire 30, although this secondary slot 16 of the first body 10 is larger than the main slot portions 21a, 21b of the main slot 21 of the second body 20 in a degree sufficient to allow movements of the second body 20 together with the archwire 30 retained in the main slot 21 thereof with respect to the first body. More specifically, in this second embodiment the secondary slot 16 of the first body 10 comprises two opposite portions which widen progressively from a central region to a peripheral region.

The second body 20 of the second embodiment is made of a material with shape memory due to a thermal effect, such as the one described in relation to the first embodiment, although here, in the original shape, the inner spherical surface portions 24 of the second body 20 have a radius slightly smaller than the radius of the outer spherical surface portions 14 of the first body 10.

Thus, when the second body 20 is cooled it becomes deformable enough to allow housing the first body 10 inside the second body 20. When the mutually coupled first and second bodies 10, 20 are heated to body temperature, for example, due to having been installed in the mouth of a patient, the second body 20 recovers the original shape and the spherical ball joint coupling is locked to immobilize the second body 20 with respect to the first body 10 in the desired position by friction between the respective outer and inner spherical surface portions 14, 24. At this temperature the archwire 30 is inserted in the main slot 21 by the deformation of the second body 20, and the archwire 30 is retained in the main slot 21 of the second body 20.

The second body 20 preferably has one or more notches 27b formed in a circumferential edge thereof adjacent to the base 11 of the first body 10, which facilitate a deformation of the second body 20 enough to allow the first body 10 to be housed in the central hollow portion 25 of the second body 20 when the second body 20 is in the deformable state.

For the purpose of maximally reducing the risk of the second body 20 breaking when it is confined in the body 10, a uniform section of material and smooth fitting radii have been envisaged. Taking into account the relatively high price of the material with shape memory, the amount thereof necessary for forming the second body 20 is minimized by the central hollow portion 25, the transverse slots 27a and said notches 27b.

Optionally, in both embodiments, the central hollow can be covered by means of a lid (not shown) provided as an additional part secured to the first or second body by elastic means.

A person skilled in the art will be able to think of modifications, variations and combinations from the embodiments shown and described without departing from the scope of the present invention as it is defined in the attached claims.

## Claims

1. An orthodontic archwire bracket, comprising a first body (10) provided with a base (11) configured to be fixed to a tooth and a second body (20) provided with a main slot (21) configured to receive an archwire (30), wherein said first and second bodies (10, 20) are connected to one another by a ball joint coupling, and the second body (20) is made of a material with shape memory which maintains an original shape at a first temperature equivalent to body temperature and acquires a deformable state at a second temperature below body temperature, and the first and second bodies (10, 20) are sized such that said ball joint coupling is locked by friction between the first and second bodies (10, 20) when both are heated to said first temperature, **characterised in that** said second body (20) comprises a central hollow portion (25) and said main slot (21) comprises two main slot portions (21a, 21b) mutually aligned on opposite sides of said central hollow portion (25), and the second body (20) further comprises retaining members (26) extending into each of said main slot portions (21a, 21b) next to an inlet, whereby said second body (20) further comprises transverse slots (27a) connected with the main slot (21) and extending therefrom to define arms (28) at the ends of which there are retaining members (26), said transverse slots (27a) facilitating the deformation of the second body (20) when the latter is in said deformable state.

2. The archwire bracket according to claim 1, **characterized in that** said retaining members (26) are configured to retain said archwire (30) in the main slot portions (21a, 21b) when the second body (20) is in said original shape and to allow inserting and removing the archwire (30) from the main slot portions (21 a, 21b) by the deformation of the second body (20) when the latter is at said second temperature below body temperature.

3. The archwire bracket according to claim 1 or 2, **characterized in that** said ball joint coupling is a spherical ball joint coupling.

4. The archwire bracket according to claim 1, 2 or 3, **characterized in that** the spherical ball joint coupling comprises at least one inner spherical surface portion (13) formed in a hollow (15) of the first body (10) and at least one outer spherical surface portion (23) formed on the second body (20), and a region of the second body (20) on which said outer spherical surface portion (23) is formed is housed inside said hollow (15) of the first body (1).

5. The archwire bracket according to claim 4, **characterized in that** the second body (20) comprises truncations (29) in the outer spherical surface portion (23).

6. The archwire bracket according to claim 4 or 5, **characterized in that** the first body (10) comprises a secondary slot (16) defined by two mutually aligned secondary slot portions (16a, 16b) formed on opposite sides of said hollow (15) to receive the archwire (30), said secondary slot portions (16a, 16b) of said secondary slot (16) of the first body (10) being sized to allow movements of the second body (20) together with the archwire (30) housed in the main slot (21) thereof with respect to the first body (10) when the second body (20) is in said deformable state.

7. The archwire bracket according to claim 1, 2 or 3, **characterized in that** the spherical ball joint coupling comprises at least one outer spherical surface portion (14) formed on the first body (10) and at least one inner spherical surface portion (24) formed in said central hollow portion (25) of the second body (20), and a part of the first body (10) on which said outer spherical surface portion (14) is formed is housed inside the central hollow portion (25) of the second body (20).

8. The archwire bracket according to claim 7, **characterized in that** the second body (20) comprises one or more notches (27b) in a circumferential edge thereof, said notches (27b) facilitating the deformation of the second body (20) when the latter is at the second temperature below body temperature.

9. The archwire bracket according to claim 7 or 8, **characterized in that** the first body (10) comprises a secondary slot (16) for receiving the archwire (30), said secondary slot (16) of the first body (10) being sized to allow movements of the second body (20) together with the archwire (30) housed in the main slot (21) thereof with respect to the first body (10) when the second body (20) is at the second temperature below body temperature.

10. The archwire bracket according to any of the previous claims, **characterized in that** the retaining members (26) comprise outer inclined surfaces (26a) for facilitating the insertion of the archwire (30) under pressure and inner inclined surfaces (26b) for facilitating the removal of the archwire (30) under pressure when the second body (20) is below body temperature.

## Patentansprüche

1. Bogendrahtzahnspange, umfassend einen ersten Körper (10), versehen mit einer Basis (11), welche dazu ausgebildet ist, an einem Zahn fixiert zu werden, und einen zweiten Körper (20), versehen mit einem Hauptschlitz (21), welcher dazu ausgebildet ist, einen Drahtbogen (30) aufzunehmen, wobei die genannten erste und zweite Körper (10, 20) durch eine Kugelgelenkkopplung miteinander verbunden sind, und der zweite Körper (20) aus einem Material mit Formgedächtnis hergestellt ist, welches eine ursprüngliche Form bei einer ersten Temperatur, welcher der Körpertemperatur entspricht, beibehält und einen verformbaren Zustand bei einer zweiten Temperatur, welche unter der Körpertemperatur liegt, erlangt, und die ersten und zweiten Körper (10, 20) derart dimensioniert sind, dass die genannte Kugelgelenkkopplung durch Reibverschluss zwischen den ersten und zweiten Körpern (10, 20) blockiert wird, wenn beide bis zur ersten Temperatur erwärmt werden, **dadurch gekennzeichnet, dass** der genannte zweite Körper (20) einen hohlen Zentralteil (25) umfasst und der genannte Hauptschlitz (21) zwei Hauptschlitzteile (21 a, 21 b) umfasst, welche auf gegenüberliegenden Seiten des genannten hohlen Zentralteils (25) gegenseitig ausgerichtet sind, und der zweite Körper (20) zusätzlich Halteelemente (26) umfasst, welche in jeden der genannten Hauptschlitzteilen (21 a, 21 b) in der Nähe eines Eingangs derselben hineinragen, wodurch der genannte zweite Körper (20) zusätzlich Querschlitze (27a) umfasst, welche mit dem Hauptschlitz (21) verbunden sind und sich davon erstrecken, um Arme (28) zu definieren, an deren Enden es Halteelemente (26) gibt, wobei die genannten Querschlitze (27a) die Verformung des zweiten Körpers (20) erleichtern, wenn sich der Letztere in dem genannten verformbaren Zustand befindet.

2. Bogendrahtzahnspange nach Anspruch 1, **dadurch gekennzeichnet, dass** die genannten Halteelemente (26) dazu ausgebildet sind, den genannten Drahtbogen (30) in den Hauptschlitzteilen (21 a, 21 b) zu halten, wenn der zweite Körper (20) in der genannten ursprünglichen Form ist und die Einführung und die Entnahme des Drahtbogens (30) aus den Hauptschlitzteilen (21 a, 21 b) mittels der Verformung des zweiten Körpers (20) zu erlauben, wenn sich der Letztere bei der genannten zweiten Temperatur, welche unter der Körpertemperatur liegt, befindet.

3. Bogendrahtzahnspange nach Anspruch 1 oder 2, **dadurch gekennzeichnet, dass** die genannte Kugelgelenkkopplung eine sphärische Kugelgelenkkopplung ist.

4. Bogendrahtzahnspange nach Anspruch 1, 2 oder 3, **dadurch gekennzeichnet, dass** die sphärische Kugelgelenkkopplung mindestens einen inneren sphärischen Oberflächenteil (13), welcher in einer Aushöhlung (15) des ersten Körpers (10) gebildet ist, und mindestens einen äußeren sphärischen Oberflächenteil (23), welcher auf dem zweiten Körper (20) gebildet ist, umfasst, und ein Bereich des zweiten Körpers (20), auf welchem der genannte äußere sphärische Oberflächenteil (23) gebildet ist, innerhalb der genannten Aushöhlung (15) des ersten Körpers (1) aufgenommen ist.

5. Bogendrahtzahnspange nach Anspruch 4, **dadurch gekennzeichnet, dass** der zweite Körper (20) Abschleifungen (29) im äußeren sphärischen Oberflächenteil (23) umfasst.

6. Bogendrahtzahnspange nach Anspruch 4 oder 5, **dadurch gekennzeichnet, dass** der erste Körper (10) einen zweiten Schlitz (16) umfasst, welcher von zwei gegeneinander ausgerichteten sekundäre Schlitzteilen (16a, 16b) definiert wird, welche auf gegenüberliegenden Seiten der genannten Aushöhlung (15) zur Aufnahme des Drahtbogens (30) gebildet sind, wobei die genannten sekundären Schlitzteile (16a, 16b) des genannten sekundären Schlitzes (16) des ersten Körpers (10) derart bemessen sind, dass sie die Bewegungen des zweiten Körpers (20) zusammen mit dem im Hauptschlitz (21) desselben aufgenommenen Drahtbogen (30) in Bezug auf den ersten Körper (10) erlauben, wenn sich der zweite Körper (20) in dem genannten verformbaren Zustand befindet.

7. Bogendrahtzahnspange nach Anspruch 1, 2 oder 3, **dadurch gekennzeichnet, dass** die sphärische Kugelgelenkkopplung mindestens einen äußeren sphärischen Oberflächenteil (14), welcher auf dem ersten Körper (10) gebildet ist, und mindestens einen inneren sphärischen Oberflächenteil (24), welcher im genannten hohlen Zentralteil (25) des zweiten Körpers (20) gebildet ist, umfasst, und ein Teil des ersten Körpers (10), auf welchem der genannte äußere sphärische Oberflächenteil (14) gebildet ist, innerhalb des hohlen Zentralteils (25) des zweiten Körpers (20) aufgenommen ist.

8. Bogendrahtzahnspange nach Anspruch 7, **dadurch gekennzeichnet, dass** der zweite Körper (20) eine oder mehrere Einschnitte (27b) in einem umlaufenden Rand desselben umfasst, wobei die genannten Einschnitte (27b) die Verformung des zweiten Körpers (20) erleichtern, wenn sich der Letztere bei der zweiten Temperatur, welche unter der Körpertemperatur liegt, befindet.

9. Bogendrahtzahnspange nach Anspruch 7 oder 8, **dadurch gekennzeichnet, dass** der erste Körper (10) einen sekundären Schlitz (16) zur Aufnahme des Drahtbogens (30) umfasst, wobei der genannte sekundäre Schlitz (16) des ersten Körpers (10) derart bemessen ist, dass die Bewegungen des zweiten Körpers (20) zusammen mit dem im Hauptschlitz (21) desselben aufgenommenen Drahtbogen (30) in Bezug auf den ersten Körper (10) erlaubt werden, wenn sich der zweite Körper (20) bei der zweiten Temperatur, welche unter der Körpertemperatur liegt, befindet.

10. Bogendrahtzahnspange nach einem der vorhergehenden Ansprüche, **dadurch gekennzeichnet, dass** die Halteelemente (26) äußere geneigte Oberflächen (26a) umfassen, zum Erleichtern der Einführung des Drahtbogens (30) unter Druck, und innere geneigte Oberflächen (26b), zum Erleichtern der Entnahme des Drahtbogens (30) unter Druck, wenn sich der zweite Körper (20) unter der Körpertemperatur befindet.

## Revendications

1. Appareil orthodontique ayant un arc en fil métallique, comportant un premier corps (10) pourvu d'une base (11) configuré pour être fixé à un dent et un deuxième corps (20) pourvu d'une fente principale (21) configuré pour recevoir un arc en fil métallique (30), dans lequel ces premier et deuxième corps (10,20) sont reliés entre eux par un accouplement de joint à bille et le deuxième corps (20) est fait en un matériau à mémoire de forme qui conserve une forme originale à une première température équivalant à la température corporelle et acquiert un état déformable à une deuxième température au-dessous de la température corporelle et des premier et deuxième corps (10,20) ayant une taille telle que cet accouplement de joint à bille est verrouillé par friction entre les premier et deuxième corps (10,20) lorsqu'ils sont tous les deux chauffés à cette première température, **caractérisé en ce que** ce deuxième corps (20) comporte
une portion centrale creuse (25) et cette fente principale (21) comporte
deux portions de fente principale (21 a, 21 b) alignées mutuellement sur des côtés opposés de cette portion creuse centrale (25) et le deuxième corps (20) comporte en plus des éléments de rétention (26) s'étendant dans chacune de ces portions de fente principale (21 a, 21 b) proche d'une entrée, où ce deuxième corps (20) comporte en plus des fentes transversales (27a) reliées à la fente principale (21) et s'étendant de là pour définir des bras (28) aux extrémités desquels se trouvent des éléments de rétention (26), ces fentes transversales (27a) facilitant la déformation du deuxième corps (20) lorsque ce dernier se trouve dans cet état déformable.

2. L'appareil orthodontique ayant un arc en fil métallique conformément à la revendication 1, **caractérisé en ce que** ces éléments de rétention (26) sont configurés pour retenir cet arc en fil métallique (30) dans les portions de fente principale (21 a, 21 b) lorsque le deuxième corps (20) est dans cette forme originale et permettre d'insérer et d'extraire l'arc en fil métallique (30) des portions de fente principale (21 a, 21 b) par la déformation du deuxième corps (20) lorsque ce dernier se trouve à cette deuxième température au-dessous de la température corporelle.

3. L'appareil orthodontique ayant un arc en fil métallique conformément à la revendication 1 ou 2, **caractérisé en ce que** cet accouplement de joint à bille est un accouplement de joint à bille sphérique.

4. L'appareil orthodontique ayant un arc en fil métallique conformément à la revendication 1, 2 ou 3, **caractérisé en ce que** l'accouplement de joint à bille sphérique comporte au moins une portion de surface intérieure sphérique (13) formée dans un creux (15) du premier corps (10) et au moins une portion de surface extérieure sphérique (23) formée sur le deuxième corps (20), et une région du deuxième corps (20) sur laquelle cette portion de surface extérieure sphérique (23) est formée est logée à l'intérieur de ce creux (15) du premier corps (1).

5. L'appareil orthodontique ayant un arc en fil métallique conformément à la revendication 4, **caractérisé en ce que** le deuxième corps (20) comporte des troncatures (29) dans la portion de surface extérieure sphérique (23).

6. L'appareil orthodontique ayant un arc en fil métallique conformément à la revendication 4 ou 5, **caractérisé en ce que** le premier corps (10) comporte une fente secondaire (16) définie par deux portions de fente secondaire (16a, 16b) alignées mutuellement, formées sur des côtés opposés de ce creux (15) pour recevoir l'arc en fil métallique (30), ces portions de fente secondaire (16a, 16b) de cette fente secondaire (16) du premier corps (10) ayant la taille permettant des mouvements du deuxième corps (20) ensemble avec l'arc en fil métallique (30) logé dans la fente principale (21) de celui-ci par rapport au premier corps (10) lorsque le deuxième corps (20) est dans cet état déformable.

7. L'appareil orthodontique ayant un arc en fil métallique conformément à la revendication 1, 2 ou 3, **caractérisé en ce que** l'accouplement de joint à bille sphérique comporte au moins une portion de surface extérieure sphérique (14) formée sur le premier corps (10) et au moins une portion de surface sphérique intérieure (24) formée dans cette portion creuse centrale (25) du deuxième corps (20), et une partie du premier corps (10), sur lequel cette portion de surface sphérique (14) est formée, est logée à l'intérieur de la portion creuse centrale (25) du deuxième corps (20).

8. L'appareil orthodontique ayant un arc en fil métallique conformément à la revendication 7, **caractérisé en ce que** le deuxième corps (20) comporte une ou plusieurs entailles (27b) sur un bord circonférentiel de celui-ci, ces entailles (27b) facilitant la déformation du deuxième corps (20) lorsque ce dernier est à la deuxième température au-dessous de la température corporelle.

9. L'appareil orthodontique ayant un arc en fil métallique conformément à la revendication 7 ou 8, **caractérisé en ce que** le premier corps (10) comporte une fente secondaire (16) pour recevoir l'arc de fil métallique (30), cette fente secondaire (16) du premier corps (10) ayant une taille permettant les mouvements du deuxième corps (20) ensemble avec l'arc de fil métallique (30) logé dans la fente principale (21) de celui-ci par rapport au premier corps (10) lorsque le deuxième corps (20) est à la deuxième température au-dessous de la température corporelle.

10. Appareil orthodontique ayant un arc en fil métallique conformément à une quelconque des revendications précédentes, **caractérisée en ce que** les éléments de rétention (26) comportent des surfaces extérieures inclinées (26a) pour faciliter l'insertion de l'arc de fil métallique (30) sous pression et des surfaces intérieures inclinées (26b) pour faciliter l'extraction de l'arc de fil métallique (30) sous pression lorsque le deuxième corps (20) se trouve au-dessous de la température corporelle.
